# EUROPEAN PATENT APPLICATION

(11) **EP 4 757 000 A1**
(43) Date of publication of application: **10.06.2026**
(21) Application number: 24853264.0
(22) Date of filing: 09.05.2024
(51) Int. Cl.: H01M 10/633, H01M 10/613

(54) **CONTROL METHOD AND APPARATUS FOR ENERGY STORAGE VALVE COOLING SYSTEM, DEVICE, AND STORAGE MEDIUM**

(30) Priority: 16.08.2023 CN 202311037025
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: SUN, Lijun, Shanghai 200241 (CN); GUO, Zide, Shanghai 200241 (CN); LU, Yanhua, Shanghai 200241 (CN); YU, Dongxu, Shanghai 200241 (CN)
(74) Representative: Gong, Jinping
(86) International application number: PCT/CN2024/091996
(87) International publication number: WO 2025/035848

(57) **Abstract**

This application relates to a control method and apparatus for an energy storage valve cooling system, a device, and a storage medium. The method includes: obtaining a switching state of an operation mode of an energy storage valve in an energy storage valve system, and adjusting a work mode of an internal cooling device in the energy storage valve cooling system based on the switching state. It can be seen that in the embodiments of this application, the work mode of the internal cooling device in the energy storage valve cooling system is adaptively adjusted based on the switching state of the operation mode of the energy storage valve, allowing a cooling flow rate of the internal cooling device in the energy storage valve cooling system to adapt to heat generated by the energy storage valve during operation. This can reduce power consumption of the energy storage valve cooling system and improve operational efficiency of both the energy storage valve cooling system and the energy storage valve system.

## Description

### CROSS-REFERENCE TO RELATED APPLICATIONS

This application claims priority to Chinese Patent Application No. 2023110370254, filed on August 16, 2023 and entitled "CONTROL METHOD AND APPARATUS FOR ENERGY STORAGE VALVE COOLING SYSTEM, DEVICE, AND STORAGE MEDIUM", which is incorporated herein by reference in its entirety.

### TECHNICAL FIELD

This application relates to the field of energy storage technology, and in particular, to a control method and apparatus for an energy storage valve cooling system, a device, and a storage medium.

### BACKGROUND

High-voltage direct-connected energy storage technology integrates a voltage source converter (voltage source converter, VSC) valve and a direct-current energy storage valve into a high-voltage direct-connected energy storage valve, offering advantages such as high modularity and high operational reliability.

In related art, to achieve a compact structure design, the power modules and battery modules in a high-voltage direct-connected energy storage valve share an energy storage valve cooling system to remove the heat generated by the power modules and battery modules during operation of the high-voltage direct-connected energy storage valve.

However, in related art, the energy storage valve cooling system consumes a significant amount of power.

### SUMMARY

In view of the above issue, this application provides a control method and apparatus for an energy storage valve cooling system, a device, and a storage medium, to address the problem of high power consumption of energy storage valve cooling systems in related art.

According to a first aspect, this application provides a control method for an energy storage valve cooling system. The method includes:
obtaining a switching state of an operation mode of an energy storage valve in an energy storage valve system; and
adjusting a work mode of an internal cooling device in the energy storage valve cooling system based on the switching state.

In the technical solution of the embodiments of this application, the work mode of the internal cooling device in the energy storage valve cooling system is adaptively adjusted based on the switching state of the operation mode of the energy storage valve, allowing the cooling flow rate of the internal cooling device in the energy storage valve cooling system to adapt to the heat generated by the energy storage valve during operation. This can reduce the power consumption of the energy storage valve cooling system and improve the operational efficiency of both the energy storage valve cooling system and the energy storage valve system.

In some embodiments, the adjusting a work mode of an internal cooling device in the energy storage valve cooling system based on the switching state includes:
determining a target work mode of the internal cooling device based on the switching state; and
switching a current work mode of the internal cooling device to the target work mode.

In the technical solution of the embodiments of this application, based on the switching state of the operation mode of the energy storage valve in the energy storage valve system, the current work mode of the internal cooling device is adjusted to a target work mode that matches the operation mode of the energy storage valve, allowing the cooling flow rate of the internal cooling device in the energy storage valve cooling system to better adapt to the heat generated by the energy storage valve during operation. This can further reduce the power consumption of the energy storage valve cooling system and improve the operational efficiency of both the energy storage valve cooling system and the energy storage valve system.

In some embodiments, the determining a target work mode of the internal cooling device based on the switching state includes:
determining a pre-switching first operation mode and a post-switching second operation mode of the energy storage valve based on the switching state; and
determining the target work mode based on heat generated by the energy storage valve in the first operation mode and heat generated by the energy storage valve in the second operation mode.

In the technical solution of the embodiments of this application, the target work mode is determined based on the heat generated by the energy storage valve before and after the operation mode switching, so that a target work mode that matches the operation mode of the energy storage valve can be determined more accurately, thereby facilitating further reduction of the power consumption of the energy storage valve cooling system.

In some embodiments, the determining the target work mode based on heat generated by the energy storage valve in the first operation mode and heat generated by the energy storage valve in the second operation mode includes:
under a condition that the heat generated by the energy storage valve in the first operation mode is less than the heat generated in the second operation mode, setting a rated work mode of the internal cooling device as the target work mode, where a working frequency of the internal cooling device in the rated work mode is a rated working frequency.

In the technical solution of the embodiments of this application, in a case that the heat generated by the energy storage valve in the first operation mode is less than the heat generated in the second operation mode, setting the rated work mode of the internal cooling device as the target work mode allows the cooling medium flow rate of the main internal cooling pump to meet the cooling medium flow rate required by the energy storage valve in the second operation mode, thereby facilitating the normal operation of the energy storage valve system.

In some embodiments, the determining the target work mode based on heat generated by the energy storage valve in the first operation mode and heat generated by the energy storage valve in the second operation mode includes:
under a condition that the heat generated by the energy storage valve in the first operation mode is greater than the heat generated in the second operation mode, setting a low-frequency work mode of the internal cooling device as the target work mode, where a working frequency of the internal cooling device in the low-frequency work mode is a low-frequency working frequency, and the low-frequency working frequency is less than a rated working frequency of the internal cooling device.

In the technical solution of the embodiments of this application, in a case that the heat generated by the energy storage valve in the first operation mode is greater than the heat generated in the second operation mode, setting the low-frequency work mode of the internal cooling device as the target work mode allows for long-term reliable operation of the battery modules and power modules while reducing the power consumption of the energy storage valve cooling system.

In some embodiments, the switching a current work mode of the internal cooling device to the target work mode includes:
in a case that the target work mode of the internal cooling device is determined based on the switching state, switching the current work mode of the internal cooling device to the target work mode after a delay of a target duration.

In the technical solution of the embodiments of this application, the current work mode of the main internal cooling pump is set as the target work mode after a target delay duration, so that the operating temperatures of the power modules and battery modules in the energy storage valve of the energy storage valve system can be reduced by a certain margin. This can prevent overheating of components in the power modules and the battery modules during the switching from the second mode to the first mode, thereby preventing damage to the components or thermal runaway in the battery modules.

In some embodiments, the switching the current work mode of the internal cooling device to the target work mode after a delay of a target duration includes:
in a case that the target work mode of the internal cooling device is determined based on the switching state, starting a timer; and
switching the current work mode of the internal cooling device to the target work mode after the timer reaches the target duration.

In some embodiments, the switching a current work mode of the internal cooling device to the target work mode includes:
controlling a frequency converter in the internal cooling device based on a working frequency corresponding to the target work mode of the internal cooling device, to adjust a rotation speed of a motor rotating component in the internal cooling device.

In the technical solution of the embodiments of this application, the work mode of the internal cooling device is switched based on a frequency converter of the internal cooling device, allowing the cooling flow rate of the energy storage valve cooling system to adapt to the heat generated by the energy storage valve during operation, thereby reducing the power consumption of the energy storage valve cooling system. Additionally, this method of switching the work mode of the internal cooling device is relatively simple and convenient, thereby facilitating improved switching efficiency.

In some embodiments, the switching a current work mode of the internal cooling device to the target work mode includes:
sending a control instruction to a control device of the energy storage valve cooling system, where the control instruction is used to instruct to switch the current work mode of the internal cooling device to the target work mode.

In some embodiments, the first operation mode is a peak-load shifting operation mode or a frequency regulation operation mode, and the second operation mode is a zero-power operation mode; or
the first operation mode is a zero-power operation mode, and the second operation mode is a peak-load shifting operation mode or a frequency regulation operation mode.

In some embodiments, the obtaining a switching state of an operation mode of an energy storage valve in an energy storage valve system includes:
determining the switching state based on detection information from an energy storage valve operation mode detection apparatus.

According to a second aspect, this application provides a control apparatus for an energy storage valve cooling system. The apparatus includes:
an obtaining module, configured to obtain a switching state of an operation mode of an energy storage valve in an energy storage valve system; and
an adjustment module, configured to adjust a work mode of an internal cooling device in the energy storage valve cooling system based on the switching state.

According to a third aspect, this application provides a control device including a memory and a processor, where the memory stores a computer program, and when the processor executes the computer program, the steps of the embodiments of the control method for an energy storage valve cooling system are implemented.

According to a fourth aspect, this application provides a computer-readable storage medium, where the computer-readable storage medium stores a computer program, and when the computer program is executed by a processor, the steps of the embodiments of the control method for an energy storage valve cooling system are implemented.

According to a fifth aspect, this application provides a computer program product including a computer program, where when the computer program is executed by a processor, the steps of the embodiments of the control method for an energy storage valve cooling system are implemented.

The foregoing description is only an overview of the technical solutions of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

A person of ordinary skill in the art can clearly understand various other advantages and benefits by reading the detailed description of the embodiments described below. The accompanying drawings are merely intended to illustrate the preferred embodiments and are not intended to limit this application. In addition, in all the accompanying drawings, the same reference signs represent the same components. In the accompanying drawings:
FIG. 1 is a schematic diagram of an application environment according to an embodiment of this application;
FIG. 2 is a schematic structural diagram of an energy storage valve cooling system according to an embodiment of this application;
FIG. 3 is a schematic structural diagram of an operation parameter monitoring module according to an embodiment of this application;
FIG. 4 is a schematic structural diagram of an internal cooling device according to an embodiment of this application;
FIG. 5 is a schematic flowchart of a control method for an energy storage valve cooling system according to some embodiments of this application;
FIG. 6 is a schematic flowchart of a method for adjusting a work mode of an internal cooling device in an energy storage valve cooling system according to some embodiments of this application;
FIG. 7 is a first schematic diagram of switching of an operation mode of an energy storage valve in an energy storage valve system and a work mode of an internal cooling device in an energy storage valve cooling system according to an embodiment of this application;
FIG. 8 is a second schematic diagram of switching of an operation mode of an energy storage valve in an energy storage valve system and a work mode of an internal cooling device in an energy storage valve cooling system according to an embodiment of this application;
FIG. 9 is a third schematic diagram of switching of an operation mode of an energy storage valve in an energy storage valve system and a work mode of an internal cooling device in an energy storage valve cooling system according to an embodiment of this application;
FIG. 10 is a fourth schematic diagram of switching of an operation mode of an energy storage valve in an energy storage valve system and a work mode of an internal cooling device in an energy storage valve cooling system according to an embodiment of this application;
FIG. 11 is a schematic structural diagram of a control apparatus for an energy storage valve cooling system according to some embodiments of this application; and
FIG. 12 is a schematic structural diagram of a control device according to some embodiments of this application.

### DESCRIPTION OF EMBODIMENTS

The following describes in detail the embodiments of technical solutions of this application with reference to the accompanying drawings. The following embodiments are merely intended for a clearer description of the technical solutions of this application and therefore are merely used as examples but do not constitute any limitation on the protection scope of this application.

Unless otherwise defined, all technical and scientific terms used herein have the same meaning as commonly understood by those skilled in the technical field of this application. The terms used herein are intended to merely describe the specific embodiments rather than to limit this application. The terms "include" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two, unless otherwise specifically stated.

A control method and apparatus for an energy storage valve cooling system, a device, and a storage medium according to the embodiments of this application can be applied to control application scenarios for high-voltage direct-connected energy storage valve cooling systems; and certainly, they can also be applied to other application scenarios.

Typically, a high-voltage direct-connected energy storage valve may include multiple energy storage sections, where each energy storage section may include, but is not limited to, a power module and a battery module. During the operation of a high-voltage direct-connected energy storage valve, the power modules and battery modules generate heat, necessitating the design of an energy storage valve cooling system to remove the generated heat.

Traditional low-voltage power conversion systems (Power Conversion System, PCS) use air cooling, while battery modules use liquid cooling, with the two not sharing a cooling system. When the battery modules are not operating, the corresponding cooling system for the battery modules can be stopped. In related art, to achieve a compact structure design, the power modules and battery modules in a high-voltage direct-connected energy storage valve may share an energy storage valve cooling system. In a case that the high-voltage direct-connected energy storage valve is in zero-power operation mode, the battery modules may not require cooling. However, considering the significant heat generated by the power modules during operation, if no cooling is provided, the junction temperature of the power modules at startup is quite high, which could damage components. Therefore, the power modules require cooling.

However, due to the large cooling flow rate of the energy storage valve cooling system, operating the energy storage valve cooling system 24 hours a day at a constant flow rate results in significant power consumption, reducing the operational efficiency of the high-voltage direct-connected energy storage system.

To address the issue of high power consumption of energy storage valve cooling systems in related art, embodiments of this application propose adjusting a work mode of an internal cooling device in an energy storage valve cooling system based on different operation modes of an energy storage valve in an energy storage valve system. This allows a cooling flow rate of the energy storage valve cooling system to adapt to the heat generated by the energy storage valve during operation, thereby reducing the power consumption of the energy storage valve cooling system and improving the operational efficiency of both the energy storage valve cooling system and the energy storage valve system.

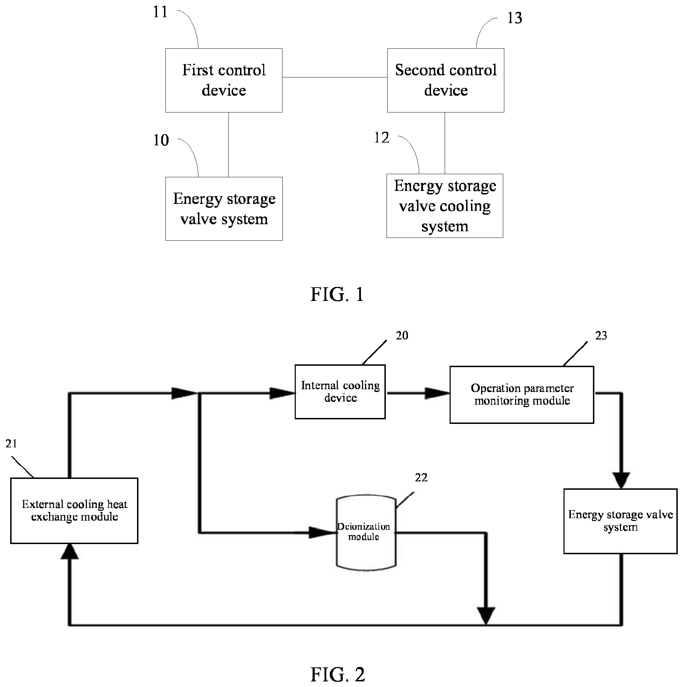

FIG. 1 is a schematic diagram of an application environment according to an embodiment of this application. As shown in FIG. 1, the application environment of the embodiment of this application may include, but is not limited to: an energy storage valve system 10, a first control device 11 of the energy storage valve system, an energy storage valve cooling system 12, and a second control device 13 of the energy storage valve cooling system. It should be understood that the first control device 11 can control the components in the energy storage valve system 10, the second control device 13 can control the components in the energy storage valve cooling system 12, and the first control device 11 and the second control device 13 can communicate with each other.

For example, the energy storage valve system 10 in the embodiments of this application may include, but is not limited to, multiple energy storage valves; and the energy storage valve cooling system 12 may include, but is not limited to, an internal cooling device, where the internal cooling device may be configured to provide power for the circulation of a cooling medium, enabling the cooling medium to remove heat generated by the operation of the energy storage valves in the energy storage valve system 10.

For example, the internal cooling device in the embodiments of this application may include, but is not limited to, a main internal cooling pump or other types of devices that can provide power.

It should be noted that the first control device 11 may employ the control method for an energy storage valve cooling system according to the embodiments of this application.

It should be understood that the first control device 11 and the second control device 13 in the embodiments of this application may be integrated into one control device.

For ease of understanding, the embodiments of this application first describe the energy storage valve cooling system and some terms.

FIG. 2 is a schematic structural diagram of an energy storage valve cooling system according to an embodiment of this application. As shown in FIG. 2, the energy storage valve cooling system in the embodiment of this application may include, but is not limited to, an internal cooling device 20, an external cooling heat exchange module 21, a deionization module 22, and an operation parameter monitoring module 23.

The internal cooling device may be configured to provide power for the circulation of a cooling medium, enabling the cooling medium to remove heat generated by the operation of the energy storage valves in the energy storage valve system.

The external cooling heat exchange module 21 may be configured to cool the heated cooling medium and release the heat to the external environment. For example, the external cooling heat exchange module 21 may include, but is not limited to, a refrigeration unit.

The deionization module 22 may be configured to reduce conductivity of the cooling medium, ensuring that the conductivity of the cooling medium meets operational requirements. For example, the deionization module 22 may include, but is not limited to, a deionization resin tank and a conductivity meter.

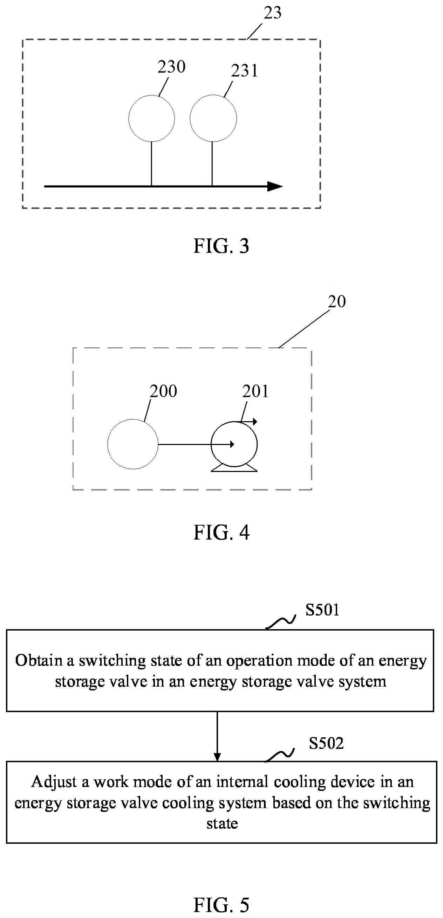

The operation parameter monitoring module 23 may be configured to monitor the temperature and flow rate of the cooling medium in the energy storage valve cooling system. FIG. 3 is a schematic structural diagram of an operation parameter monitoring module according to an embodiment of this application. As shown in FIG. 3, the operation parameter monitoring module 23 may include, but is not limited to, a temperature monitoring instrument 230 and a flow monitoring instrument 231.

FIG. 4 is a schematic structural diagram of an internal cooling device according to an embodiment of this application. As shown in FIG. 4, the internal cooling device 20 of the embodiments of this application may include, but is not limited to, a frequency converter 200 and a motor rotating component 201. The frequency converter 200 may receive a control instruction delivered by the first control device 11 and adjust a rotation speed of the motor rotating component 201 based on the control instruction, thereby enabling the internal cooling device to operate in different work modes.

It should be noted that the structure of the energy storage valve cooling system provided in the above embodiments of this application is illustrative, and certainly, other cooling system structures may also be used; as long as the cooling system includes an internal cooling device, the control method for an energy storage valve cooling system provided in the embodiments of this application can be applied.

The operation mode of the energy storage valve involved in the embodiments of this application may include, but are not limited to, any one of the following: peak-load shifting operation mode, frequency regulation operation mode, and zero-power operation mode. The peak-load shifting operation mode may refer to a mode in which the battery modules in the energy storage valve are in a charging or discharging state; the frequency regulation operation mode may refer to a mode in which grid frequency regulation is supported; and the zero-power operation mode may refer to a mode in which the power modules and battery modules in the energy storage valve are in a non-operating state. It should be noted that the heat generated by the energy storage valve in the peak-load shifting operation mode or the frequency regulation operation mode is greater than the heat generated by the energy storage valve in the zero-power operation mode.

The work mode of the internal cooling device involved in the embodiments of this application may include, but are not limited to, a rated work mode or a low-frequency work mode. A rated working frequency of the internal cooling device in the rated work mode is greater than a low-frequency working frequency in the low-frequency work mode. For example, the rated working frequency may be 50 Hz, and the low-frequency working frequency may be 25 Hz or other frequencies less than 50 Hz.

In the embodiments of this application, in a case that the work mode of the internal cooling device is the rated work mode, the cooling medium flow rate of the internal cooling device can meet the cooling medium flow rate required by the energy storage valve in the peak-load shifting operation mode or the frequency regulation operation mode.

In the embodiments of this application, in a case that the work mode of the internal cooling device is the low-frequency work mode, the cooling medium flow rate of the internal cooling device can meet the cooling medium flow rate required by the energy storage valve when switching from the zero-power operation mode to the peak-load shifting operation mode or the frequency regulation operation mode. This can prevent overheating of components in the power modules and the battery modules during the switching process, thereby preventing damage to the components or thermal runaway in the battery modules.

In some embodiments, FIG. 5 is a flowchart of a control method for an energy storage valve cooling system according to some embodiments of this application. In the embodiments of this application, the method is applied to the first control device of the energy storage valve system shown in FIG. 1 for illustration. As shown in FIG. 5, the method in the embodiments of this application may include the following steps.

Step S501: Obtain a switching state of an operation mode of an energy storage valve in an energy storage valve system.

The energy storage valve system in the embodiments of this application may include multiple energy storage valves, and any energy storage valve may include, but is not limited to, power modules and battery modules. Considering the compact structure design, the power modules and battery modules in the embodiments of this application may share an energy storage valve cooling system for cooling, to remove the heat generated by the energy storage valves in the energy storage valve system during operation.

The switching state of the operation mode of the energy storage valve in the embodiments of this application may be used to indicate a post-switching second operation mode of the energy storage valve, and certainly, may also be used to indicate other information, such as a pre-switching first operation mode of the energy storage valve.

It should be understood that the operation modes of multiple energy storage valves in the energy storage valve system may be the same. For example, in a case that the operation mode of any energy storage valve in the energy storage valve system switches from the first operation mode to the second operation mode, the operation modes of other energy storage valves in the energy storage valve system also switch from the first operation mode to the second operation mode.

In this step, the first control device may obtain the switching state of the operation mode of the energy storage valve in the energy storage valve system in real time; and the first control device may obtain the switching state of the operation mode of the energy storage valve in the energy storage valve system at preset intervals, or the first control device may obtain the switching state of the operation mode of the energy storage valve in the energy storage valve system upon receiving an adjustment instruction.

In one possible implementation, the first control device may determine the switching state based on detection information from an energy storage valve operation mode detection apparatus, where the detection information may include, but is not limited to, operating voltage and/or operating current of the energy storage valve. It should be understood that the energy storage valve operation mode detection apparatus may include, but is not limited to, a voltage detection apparatus and a current detection apparatus disposed in the energy storage valve system. The voltage detection apparatus is used to detect the operating voltage of the energy storage valve in the energy storage valve system, and the current detection apparatus is used to detect the operating current of the energy storage valve in the energy storage valve system. It should be noted that the energy storage valve operation mode detection apparatus may communicate with the first control device to send the detection information to the first control device.

In another possible implementation, the first control device may receive the switching state of the operation mode of the energy storage valve in the energy storage valve system sent by another device.

Certainly, the first control device may also obtain the switching state of the operation mode of the energy storage valve in the energy storage valve system in other manners.

Step S502: Adjust a work mode of an internal cooling device in the energy storage valve cooling system based on the switching state.

In this step, the first control device may adaptively adjust, based on the switching state of the operation mode of the energy storage valve in the energy storage valve system, the work mode of the internal cooling device in the energy storage valve cooling system according to a preset adjustment policy, allowing the cooling flow rate after the adjustment of the work mode of the internal cooling device to adapt to the heat generated by the energy storage valve during operation. The preset adjustment policy is used to indicate the adjusted work mode (or target work mode) of the internal cooling device corresponding to different switching states.

According to the above control method for an energy storage valve cooling system, the switching state of the operation mode of the energy storage valve in the energy storage valve system is obtained, and the work mode of the internal cooling device in the energy storage valve cooling system is adjusted based on the switching state. It can be seen that in the embodiments of this application, the work mode of the internal cooling device in the energy storage valve cooling system is adaptively adjusted based on the switching state of the operation mode of the energy storage valve, allowing the cooling flow rate of the internal cooling device to adapt to the heat generated by the energy storage valve during operation. This can reduce the power consumption of the energy storage valve cooling system and improve the operational efficiency of both the energy storage valve cooling system and the energy storage valve system.

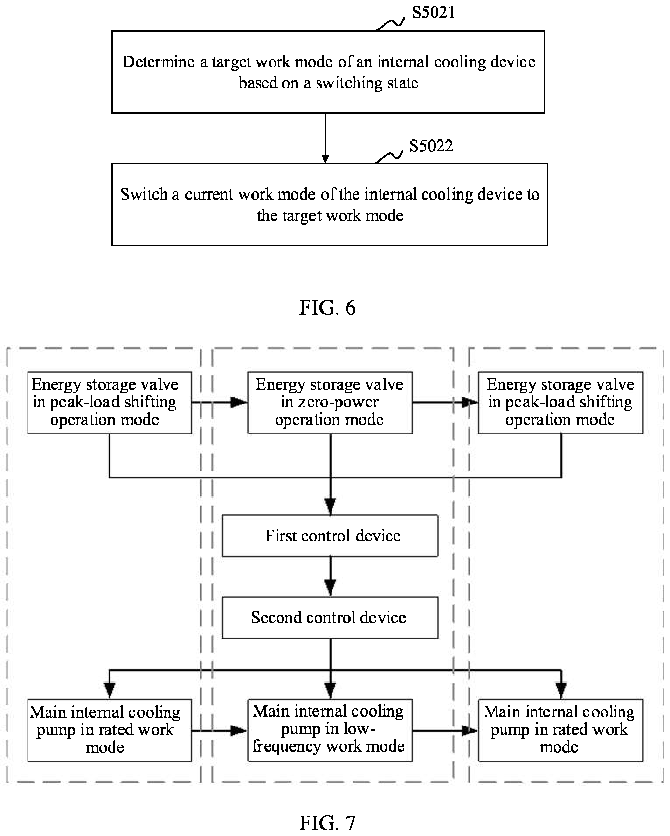

In some embodiments, FIG. 6 is a flowchart of a method for adjusting a work mode of an internal cooling device in an energy storage valve cooling system according to some embodiments of this application. Based on the above embodiments, in this embodiment of this application, the step S502 of "adjusting a work mode of an internal cooling device in the energy storage valve cooling system based on the switching state" is detailed. As shown in FIG. 6, the step S502 in the embodiment of this application may include the following steps.

Step S5021: Determine a target work mode of the internal cooling device based on the switching state.

In this step, based on the switching state of the operation mode of the energy storage valve in the energy storage valve system, the first control device may determine, for the internal cooling device in the energy storage valve cooling system, a target work mode that matches the operation mode of the energy storage valve, where a cooling flow rate of the internal cooling device in the energy storage valve cooling system in the target work mode can meet an operational cooling requirement of the power modules and battery modules in the energy storage valve system. This enables the cooling flow rate of the internal cooling device in the energy storage valve cooling system to adapt to the heat generated by the energy storage valve during operation.

Optionally, the first control device may determine, based on the switching state, a pre-switching first operation mode and a post-switching second operation mode of the energy storage valve, and determine the target work mode based on heat generated by the energy storage valve in the first operation mode and heat generated by the energy storage valve in the second operation mode.

In the embodiments of this application, the first control device may determine, based on the switching state of the operation mode of the energy storage valve in the energy storage valve system, the first operation mode used by the energy storage valve before the switching and the second operation mode used after the switching, where the heat generated by the energy storage valve in the first operation mode may be the same as that generated in the second operation mode, or the heat generated by the energy storage valve in the first operation mode may be different from that generated in the second operation mode.

Further, the first control device may determine the target work mode based on the heat generated by the energy storage valve in the first operation mode and the heat generated by the energy storage valve in the second operation mode.

It should be noted that in a case that the heat generated by the energy storage valve in the first operation mode is different from the heat generated in the second operation mode, the first control device needs to adjust the work mode of the internal cooling device in the energy storage valve cooling system, that is, the target work mode is different from the current work mode; in a case that the heat generated by the energy storage valve in the first operation mode is the same as the heat generated in the second operation mode, the first control device does not need to adjust the work mode of the internal cooling device in the energy storage valve cooling system, that is, the target work mode is the same as the current work mode.

The following embodiments of this application mainly describe how to determine the target work mode in a case that the heat generated by the energy storage valve in the first operation mode is different from the heat generated by the energy storage valve in the second operation mode.

For example, in the embodiments of this application, the first operation mode may be a peak-load shifting operation mode or a frequency regulation operation mode, and the second operation mode may be a zero-power operation mode.

For another example, in the embodiments of this application, the first operation mode may be a zero-power operation mode, and the second operation mode may be a peak-load shifting operation mode or a frequency regulation operation mode.

In one possible implementation, under a condition that the heat generated by the energy storage valve in the first operation mode is less than the heat generated in the second operation mode, a rated work mode of the internal cooling device is set as the target work mode, where a working frequency of the internal cooling device in the rated work mode is a rated working frequency.

In this implementation, if the heat generated by the energy storage valve in the first operation mode is less than the heat generated in the second operation mode, that is, the energy storage valve switches from a first operation mode with less heat generation to a second operation mode with more heat generation, requiring a higher cooling medium flow rate, the first control device may set the rated work mode of the internal cooling device as the target work mode, so that the cooling medium flow rate of the internal cooling device can meet the cooling medium flow rate required by the energy storage valve in the energy storage valve system in the second operation mode.

For example, assuming that the first operation mode is a zero-power operation mode and the second operation mode is a peak-load shifting operation mode or a frequency regulation operation mode, in a case that the first control device detects that the operation mode of the energy storage valve in the energy storage valve system switches from the zero-power operation mode to the peak-load shifting operation mode or the frequency regulation operation mode, the rated work mode of the internal cooling device may be set as the target work mode, so that the cooling medium flow rate of the internal cooling device can meet the cooling medium flow rate required by the energy storage valve in the peak-load shifting operation mode or the frequency regulation operation mode.

In another possible implementation, under a condition that the heat generated by the energy storage valve in the first operation mode is greater than the heat generated in the second operation mode, a low-frequency work mode of the internal cooling device is set as the target work mode, where a working frequency of the internal cooling device in the low-frequency work mode is a low-frequency working frequency, and the low-frequency working frequency is less than a rated working frequency of the internal cooling device.

In this implementation, if the heat generated by the energy storage valve in the first operation mode is greater than the heat generated in the second operation mode, that is, the energy storage valve switches from a first operation mode with more heat generation to a second operation mode with less heat generation, requiring a lower cooling medium flow rate, the first control device may set the low-frequency work mode of the internal cooling device as the target work mode, so that the cooling medium flow rate of the internal cooling device can meet the cooling medium flow rate required by the energy storage valve for switching from the second operation mode to the first operation mode. This can prevent overheating of components in the power modules and the battery modules during the switching process, thereby preventing damage to the components or thermal runaway in the battery modules.

For example, assuming that the first operation mode is a peak-load shifting operation mode or a frequency regulation operation mode and the second operation mode is a zero-power operation mode, in a case that the first control device detects that the operation mode of the energy storage valve in the energy storage valve system switches from the peak-load shifting operation mode or the frequency regulation operation mode to the zero-power operation mode, the low-frequency work mode of the internal cooling device may be set as the target work mode, so that the cooling medium flow rate of the internal cooling device can meet the cooling medium flow rate required by the energy storage valve for switching from the zero-power operation mode to the peak-load shifting operation mode or the frequency regulation operation mode.

It can be seen that in this implementation, in a case that the energy storage valve switches from a first operation mode with more heat generation to a second operation mode with less heat generation, setting the low-frequency work mode of the internal cooling device as the target work mode facilitates long-term reliable operation of the battery modules and power modules while reducing the power consumption of the energy storage valve cooling system.

Step S5022: Switch a current work mode of the internal cooling device to the target work mode.

In this step, the first control device may switch the current work mode of the internal cooling device in the energy storage valve cooling system to a target work mode that matches the operation mode of the energy storage valve in the energy storage valve system. It can be seen that in the embodiments of this application, depending on the different operation modes of the energy storage valve in the energy storage valve system, the current work mode of the internal cooling device is switched to a target work mode that matches the operation mode of the energy storage valve, allowing the cooling flow rate of the energy storage valve cooling system to adapt to the heat generated by the energy storage valve during operation. This can reduce the power consumption of the energy storage valve cooling system and improve the operational efficiency of both the energy storage valve cooling system and the energy storage valve system.

For example, the first control device may send a control instruction to the second control device of the energy storage valve cooling system, where the control instruction may be used to instruct to switch the current work mode of the internal cooling device to the target work mode, so that the second control device can switch the current work mode of the internal cooling device to the target work mode based on the control instruction, thereby implementing the switching of the work mode of the internal cooling device. The control instruction may include, but is not limited to, identification information of the target work mode or the working frequency corresponding to the target work mode.

It should be noted that in the embodiments of this application, if the first control device of the energy storage valve system and the second control device of the energy storage valve cooling system can be integrated into one control device, the control device can directly control the switching of the current work mode of the internal cooling device to the target work mode.

In one possible implementation, in a case that the target work mode of the internal cooling device is determined to be the rated work mode based on the switching state, the first control device may promptly switch the current work mode of the internal cooling device to the target work mode, allowing the cooling flow rate of the energy storage valve cooling system to quickly adapt to the heat generated by the energy storage valve during operation.

In another possible implementation, in a case that the target work mode of the internal cooling device is determined to be the low-frequency work mode based on the switching state, the first control device may switch the current work mode of the internal cooling device to the target work mode after a delay of a target duration.

In this implementation, in a case that the target work mode of the internal cooling device is determined to be the low-frequency work mode based on the switching state, considering that when the energy storage valve subsequently switches from the second operation mode to the first operation mode with more heat generation, the internal cooling device needs a response time to switch from the low-frequency work mode to the rated work mode, to prevent the cooling medium flow rate of the internal cooling device from being unable to meet the cooling requirement of the energy storage valve during the process of switching to the first operation mode, the first control device may switch the current work mode of the internal cooling device to the target work mode after a delay of a target duration, to reduce the operating temperatures of the power modules and battery modules in the energy storage valve system by a certain margin. This can prevent overheating of components in the power modules and the battery modules during the switching from the second operation mode to the first operation mode, thereby preventing damage to the components or thermal runaway in the battery modules.

For example, the first control device may start a timer in a case that the target work mode of the internal cooling device is determined based on the switching state, and switch the current work mode of the internal cooling device to the target work mode after the timer reaches the target duration.

Certainly, the first control device may also implement the switching the current work mode of the internal cooling device to the target work mode after a delay of a target duration in other manners.

In summary, in the embodiments of this application, the target work mode of the internal cooling device is determined based on the switching state of the operation mode of the energy storage valve in the energy storage valve system; and further, the current work mode of the internal cooling device is switched to the target work mode. It can be seen that in the embodiments of this application, based on the switching state of the operation mode of the energy storage valve in the energy storage valve system, the current work mode of the internal cooling device is adjusted to a target work mode that matches the operation mode of the energy storage valve, allowing the cooling flow rate of the internal cooling device in the energy storage valve cooling system to better adapt to the heat generated by the energy storage valve during operation. This can further reduce the power consumption of the energy storage valve cooling system and improve the operational efficiency of both the energy storage valve cooling system and the energy storage valve system.

In some embodiments, based on the above embodiments, this embodiment of this application further describes the step S5022 of "switching the current work mode of the internal cooling device to the target work mode".

For example, in the embodiments of this application, the internal cooling device may include, but is not limited to, a frequency converter and a motor rotating component. The first control device may control the frequency converter in the internal cooling device based on the working frequency corresponding to the target work mode to adjust a rotation speed of the motor rotating component in the internal cooling device, thereby implementing the switching of the current work mode of the internal cooling device to the target work mode. It should be understood that a working frequency of the frequency converter may be the same as the working frequency corresponding to the target work mode.

In one possible implementation, the first control device may send an adjustment instruction to the frequency converter in the internal cooling device, so that the frequency converter can adjust the working frequency based on the adjustment instruction to adjust the rotation speed of the motor rotating component in the internal cooling device, where the adjustment instruction may include, but is not limited to, identification information of the target work mode or the working frequency corresponding to the target work mode.

In another possible implementation, the first control device may send a control instruction to the second control device of the energy storage valve cooling system, so that the second control device sends an adjustment instruction to the frequency converter in the internal cooling device based on the control instruction, enabling the frequency converter to adjust the working frequency based on the adjustment instruction, thereby adjusting the rotation speed of the motor rotating component in the internal cooling device.

Certainly, the first control device may also control the frequency converter in the internal cooling device based on the working frequency corresponding to the target work mode of the internal cooling device in other manners.

For ease of understanding, the following embodiments of this application are described based on scenarios with different target work modes.

In one possible implementation, if the target work mode is the rated work mode, the first control device may control the working frequency of the frequency converter in the internal cooling device based on the rated working frequency corresponding to the rated work mode to adjust the rotation speed of the motor rotating component, thereby controlling the internal cooling device to operate in the rated work mode.

The following embodiments of this application describe the process of determining the rated working frequency and cooling medium flow rate corresponding to the rated work mode of the internal cooling device.

To ensure the normal operation of the battery modules and power modules of the energy storage valve in the energy storage valve system in the peak-load shifting operation mode or the frequency regulation operation mode, it is assumed that: a cooling medium flow rate required for cooling a single battery module is QE, a cooling medium flow rate required for cooling a single power module is QI, a monitored inlet temperature of the cooling medium is T1, a maximum allowable steady-state operating temperature of a single battery module is TE, a maximum allowable steady-state operating temperature of a single power module is TI, an operating heat generation power of a single battery module is PE, and an operating heat generation power of a single power module is PI.

Based on TE = T1 + KE * QE * PE, QE = (TE - T1)/(KE * PE) can be obtained.

KE is a first preset equivalent calculation coefficient, affected by factors such as the thermal resistance of the water-cooling plate in the battery module and the heat transfer resistance of the battery body.

Based on TI = T1 + KI * QI * PI, QI = (TI - T1)/(KI * PI) can be obtained.

KI is a second preset equivalent calculation coefficient, affected by factors such as the thermal resistance of the water-cooling plate in the power module and the heat transfer resistance of the battery body.

From the above, the cooling medium flow rate Q1 of the internal cooling device in the energy storage valve cooling system at the rated working frequency F1 in the rated work mode is Q1 = N1 * QE + N2 * QI, where N1 represents a calculation coefficient for the number of battery modules of the energy storage valve in the energy storage valve system, and N2 represents a calculation coefficient for the number of power modules of the energy storage valve in the energy storage valve system.

It should be noted that there is a preset mapping relationship between the outlet flow rate (or cooling medium flow rate) of the internal cooling device and the corresponding working frequency. Therefore, based on the cooling medium flow rate required by the energy storage valve in the energy storage valve system in the peak-load shifting operation mode or the frequency regulation operation mode, the rated working frequency of the internal cooling device in the rated work mode can be determined.

In another possible implementation, if the target work mode is the low-frequency work mode, the first control device may control the working frequency of the frequency converter in the internal cooling device based on the low-frequency working frequency corresponding to the low-frequency work mode to adjust the rotation speed of the motor rotating component, thereby controlling the internal cooling device to operate in the low-frequency work mode.

The following embodiments of this application describe the process of determining the low-frequency working frequency and cooling medium flow rate corresponding to the low-frequency work mode of the internal cooling device.

When the internal cooling device switches from the low-frequency work mode to the rated work mode, due to the structure and system inertia of the internal cooling device, a response time is required for the internal cooling device to recover to the cooling medium flow rate Q1 at the rated working frequency F1 corresponding to the rated work mode. Therefore, it takes time for the cooling medium flow rate of the battery module to recover to the rated flow QE and the cooling medium flow rate of the power module to recover to the rated flow QI. During this process, the components in the power modules and the battery modules are prone to overheating, causing damage to the components and thermal runaway in the battery modules. Therefore, the following control is required.

Considering that when the energy storage valve in the energy storage valve system switches from the peak-load shifting operation mode or the frequency regulation operation mode to the zero-power operation mode, the battery module and power module stop operating and generating heat, when it is necessary to switch the work mode of the internal cooling device from the rated work mode to the low-frequency work mode, the work mode of the internal cooling device can be switched from the rated work mode to the low-frequency work mode after a delay of a target duration, thereby reducing the operating temperature of the battery module from TE to TE1, and reducing the operating temperature of the power module from TI to TI1.

The cooling medium flow rate Q2 of the internal cooling device in the energy storage valve cooling system at the low-frequency working frequency F2 corresponding to the low-frequency work mode is Q2 = N1 * QE1 + N2 * QI1.

The cooling medium flow rate QE1 required for cooling a single battery module is (TE - TE1)/(KE1 * PE); the cooling medium flow rate QI1 required for cooling a single power module is (TI - TI1)/(KI1 * PI); KE1 is a third equivalent calculation coefficient, affected by factors such as the thermal resistance of the water-cooling plate in the battery module and the heat transfer resistance of the battery body under varying flow rates; and KI1 is a fourth equivalent calculation coefficient, affected by factors such as the thermal resistance of the water-cooling plate in the power module and the heat transfer resistance of the battery body under varying flow rates.

It should be noted that there is a preset mapping relationship between the cooling medium flow rate of the internal cooling device and the corresponding working frequency. Therefore, based on the cooling medium flow rate required by the energy storage valve in the energy storage valve system in the zero-power operation mode, the low-frequency working frequency of the internal cooling device in the low-frequency work mode can be determined.

In summary, in the embodiments of this application, the work mode of the internal cooling device is switched based on a frequency converter of the internal cooling device, allowing the cooling flow rate of the energy storage valve cooling system to adapt to the heat generated by the energy storage valve during operation, thereby reducing the power consumption of the energy storage valve cooling system. Additionally, this method of switching the work mode of the internal cooling device is relatively simple and convenient, thereby facilitating improved switching efficiency.

For ease of understanding, in the following embodiments of this application, the control method for an energy storage valve cooling system according to the embodiments of this application are further described using an example in which the operation mode of the energy storage valve includes a peak-load shifting operation mode, a frequency regulation operation mode, or a zero-power operation mode, and the work mode of the internal cooling device may include a rated work mode or a low-frequency work mode.
I. Start-up phase:
   (1) When detecting that the operation mode of the energy storage valve in the energy storage valve system is the peak-load shifting operation mode or the frequency regulation operation mode, the first control device of the energy storage valve system can determine that the target work mode of the internal cooling device in the energy storage valve cooling system is the rated work mode, and send a first control instruction to the second control device of the energy storage valve cooling system, where the first control instruction may be used to instruct to switch the work mode of the internal cooling device to the rated work mode, so that the second control device can switch the work mode of the internal cooling device to the rated work mode based on the first control instruction.
   (2) When detecting that the operation mode of the energy storage valve in the energy storage valve system is the zero-power operation mode, the first control device of the energy storage valve system can determine that the target work mode of the internal cooling device in the energy storage valve cooling system is the low-frequency work mode, and send a second control instruction to the second control device of the energy storage valve cooling system, where the second control instruction may be used to instruct to switch the work mode of the internal cooling device to the low-frequency work mode, so that the second control device can switch the work mode of the internal cooling device to the low-frequency work mode based on the second control instruction.
II. During operation:
   (1) FIG. 7 is a first schematic diagram of switching of an operation mode of an energy storage valve in an energy storage valve system and a work mode of an internal cooling device in an energy storage valve cooling system according to an embodiment of this application. As shown in FIG. 7, when detecting that the operation mode of the energy storage valve in the energy storage valve system switches from the peak-load shifting operation mode to the zero-power operation mode, the first control device can determine that the target work mode of the internal cooling device in the energy storage valve cooling system is the low-frequency work mode, and can send a second control instruction to the second control device of the energy storage valve cooling system, where the second control instruction may be used to instruct to switch the current work mode of the internal cooling device to the low-frequency work mode, so that the second control device can switch the work mode of the internal cooling device from the rated work mode to the low-frequency work mode based on the second control instruction. It should be noted that the work mode of the internal cooling device needs to be switched to the low-frequency work mode after a delay of the target duration.

For example, after determining that the target work mode of the internal cooling device is the low-frequency work mode, the first control device may send the second control instruction to the second control device after a delay of a target duration.

For another example, after determining that the target work mode of the internal cooling device is the low-frequency work mode, the first control device may send the second control instruction to the second control device, where the second control instruction may carry the target duration so that the second control device, upon receiving of the second control instruction, switches the work mode of the internal cooling device to the low-frequency work mode based on the second control instruction after a delay of the target duration.

Further, when detecting that the operation mode of the energy storage valve in the energy storage valve system switches from the zero-power operation mode to the peak-load shifting operation mode, the first control device can determine that the target work mode of the internal cooling device in the energy storage valve cooling system is the rated work mode, and can send a first control instruction to the second control device of the energy storage valve cooling system, where the first control instruction may be used to instruct to switch the current work mode of the internal cooling device to the rated work mode, so that the second control device can switch the work mode of the internal cooling device from the low-frequency work mode to the rated work mode based on the first control instruction.

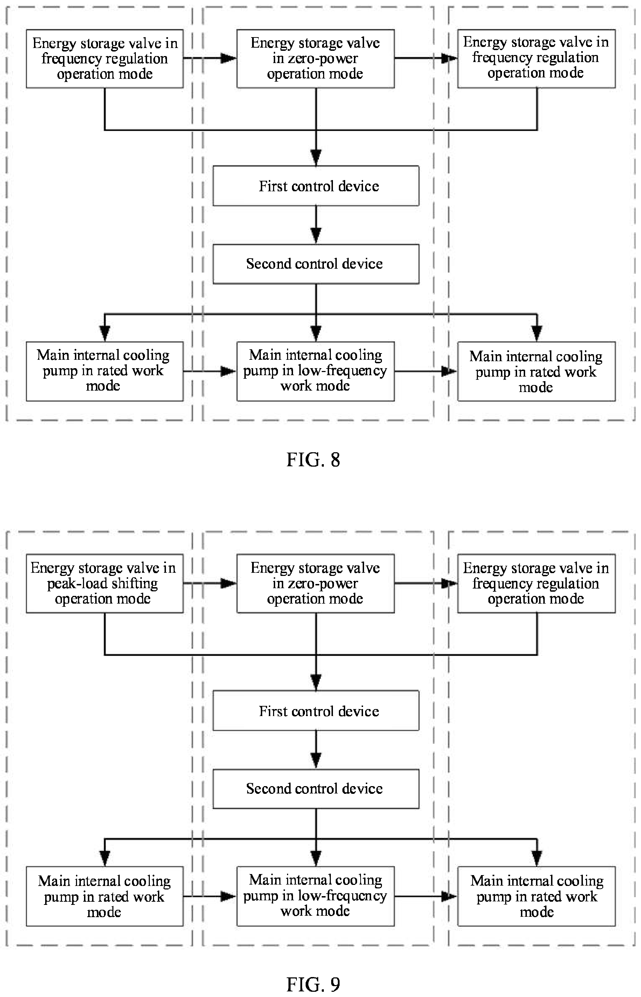

(2) FIG. 8 is a second schematic diagram of switching of an operation mode of an energy storage valve in an energy storage valve system and a work mode of an internal cooling device in an energy storage valve cooling system according to an embodiment of this application. As shown in FIG. 8, when detecting that the operation mode of the energy storage valve in the energy storage valve system switches from the frequency regulation operation mode to the zero-power operation mode, the first control device can determine that the target work mode of the internal cooling device in the energy storage valve cooling system is the low-frequency work mode, and can send a second control instruction to the second control device of the energy storage valve cooling system, where the second control instruction may be used to instruct to switch the current work mode of the internal cooling device to the low-frequency work mode, so that the second control device can switch the work mode of the internal cooling device from the rated work mode to the low-frequency work mode based on the second control instruction. It should be noted that the work mode of the internal cooling device needs to be switched to the low-frequency work mode after a delay of the target duration.

Further, when detecting that the operation mode of the energy storage valve in the energy storage valve system switches from the zero-power operation mode to the frequency regulation operation mode, the first control device can determine that the target work mode of the internal cooling device in the energy storage valve cooling system is the rated work mode, and can send a first control instruction to the second control device of the energy storage valve cooling system, where the first control instruction may be used to instruct to switch the current work mode of the internal cooling device to the rated work mode, so that the second control device can switch the work mode of the internal cooling device from the low-frequency work mode to the rated work mode based on the first control instruction.

(3) FIG. 9 is a third schematic diagram of switching of an operation mode of an energy storage valve in an energy storage valve system and a work mode of an internal cooling device in an energy storage valve cooling system according to an embodiment of this application. As shown in FIG. 9, when detecting that the operation mode of the energy storage valve in the energy storage valve system switches from the peak-load shifting operation mode to the zero-power operation mode, the first control device can determine that the target work mode of the internal cooling device in the energy storage valve cooling system is the low-frequency work mode, and can send a second control instruction to the second control device of the energy storage valve cooling system, where the second control instruction may be used to instruct to switch the current work mode of the internal cooling device to the low-frequency work mode, so that the second control device can switch the work mode of the internal cooling device from the rated work mode to the low-frequency work mode based on the second control instruction. It should be noted that the work mode of the internal cooling device needs to be switched to the low-frequency work mode after a delay of the target duration.

Further, when detecting that the operation mode of the energy storage valve in the energy storage valve system switches from the zero-power operation mode to the frequency regulation operation mode, the first control device can determine that the target work mode of the internal cooling device in the energy storage valve cooling system is the rated work mode, and can send a first control instruction to the second control device of the energy storage valve cooling system, where the first control instruction may be used to instruct to switch the current work mode of the internal cooling device to the rated work mode, so that the second control device can switch the work mode of the internal cooling device from the low-frequency work mode to the rated work mode based on the first control instruction.

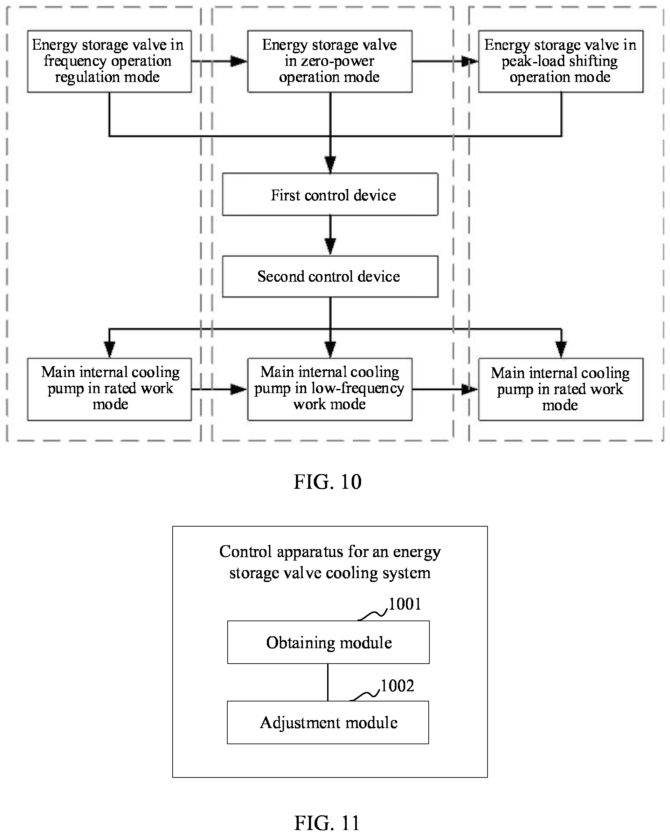

(4) FIG. 10 is a fourth schematic diagram of switching of an operation mode of an energy storage valve in an energy storage valve system and a work mode of an internal cooling device in an energy storage valve cooling system according to an embodiment of this application. As shown in FIG. 10, when detecting that the operation mode of the energy storage valve in the energy storage valve system switches from the frequency regulation operation mode to the zero-power operation mode, the first control device can determine that the target work mode of the internal cooling device in the energy storage valve cooling system is the low-frequency work mode, and can send a second control instruction to the second control device of the energy storage valve cooling system, where the second control instruction may be used to instruct to switch the current work mode of the internal cooling device to the low-frequency work mode, so that the second control device can switch the work mode of the internal cooling device from the rated work mode to the low-frequency work mode based on the second control instruction. It should be noted that the work mode of the internal cooling device needs to be switched to the low-frequency work mode after a delay of the target duration.

Further, when detecting that the operation mode of the energy storage valve in the energy storage valve system switches from the zero-power operation mode to the peak-load shifting operation mode, the first control device can determine that the target work mode of the internal cooling device in the energy storage valve cooling system is the rated work mode, and can send a first control instruction to the second control device of the energy storage valve cooling system, where the first control instruction may be used to instruct to switch the current work mode of the internal cooling device to the rated work mode, so that the second control device can switch the work mode of the internal cooling device from the low-frequency work mode to the rated work mode based on the first control instruction.

In summary, in the embodiments of this application, the first control device of the energy storage valve system sends different control instructions to the second control device of the energy storage valve cooling system based on the switching state of the operation mode of the energy storage valve in the energy storage valve system, so as to adjust the work mode of the internal cooling device to a target work mode that matches the operation mode of the energy storage valve. This allows the cooling flow rate of the energy storage valve cooling system to adapt to the heat generated by the energy storage valve during operation, thereby facilitating long-term reliable operation of the battery modules and power modules while reducing the power consumption of the energy storage valve cooling system.

It should be understood that although the steps in the flowcharts of the above embodiments are shown sequentially as indicated by arrows, these steps are not necessarily executed in the order indicated by the arrows. Unless explicitly stated herein, the execution of these steps is not strictly limited to a specific order, and these steps may be executed in other orders. Moreover, at least some of the steps in the flowcharts of the above embodiments may include multiple steps or multiple stages, and these steps or stages are not necessarily executed at the same time but may be executed at different times. The execution order of these steps or stages is not necessarily sequential, and they may be executed in turn or alternately with other steps or at least part of the steps or stages in other steps.

Based on the same inventive concept, an embodiment of this application further provides a control apparatus for implementing the foregoing control method for an energy storage valve cooling system. The implementation solution provided by the apparatus is similar to the implementation solution described in the foregoing method. Therefore, for the specific limitations in one or more embodiments of the control apparatus for an energy storage valve cooling system provided below, reference may be made to the limitations of the control method for an energy storage valve cooling system described above, and details are not repeated herein.

In some embodiments, FIG. 11 is a schematic structural diagram of a control apparatus for an energy storage valve cooling system according to some embodiments of this application. The control apparatus for an energy storage valve cooling system provided in this embodiment of this application may be applied to the first control device described above. As shown in FIG. 11, the control apparatus for an energy storage valve cooling system in this embodiment of this application may include: an obtaining module 1001 and an adjustment module 1002.

The obtaining module 1001 is configured to obtain a switching state of an operation mode of an energy storage valve in an energy storage valve system.

The adjustment module 1002 is configured to adjust a work mode of an internal cooling device in the energy storage valve cooling system based on the switching state.

In some embodiments, the adjustment module 1002 includes:
a determining unit, configured to determine a target work mode of the internal cooling device based on the switching state; and
a switching unit, configured to switch a current work mode of the internal cooling device to the target work mode.

In some embodiments, the determining unit is specifically configured to:
determine a pre-switching first operation mode and a post-switching second operation mode of the energy storage valve based on the switching state;
determine the target work mode based on heat generated by the energy storage valve in the first operation mode and heat generated by the energy storage valve in the second operation mode.

In some embodiments, the determining unit is specifically configured to:
under a condition that the heat generated by the energy storage valve in the first operation mode is less than the heat generated in the second operation mode, set a rated work mode of the internal cooling device as the target work mode, where a working frequency of the internal cooling device in the rated work mode is a rated working frequency.

In some embodiments, the determining unit is specifically configured to:
under a condition that the heat generated by the energy storage valve in the first operation mode is greater than the heat generated in the second operation mode, set a low-frequency work mode of the internal cooling device as the target work mode, where a working frequency of the internal cooling device in the low-frequency work mode is a low-frequency working frequency, and the low-frequency working frequency is less than a rated working frequency of the internal cooling device.

In some embodiments, the switching unit is specifically configured to:
in a case that the target work mode of the internal cooling device is determined based on the switching state, switch the current work mode of the internal cooling device to the target work mode after a delay of a target duration.

In some embodiments, the switching unit is specifically configured to:
in a case that the target work mode of the internal cooling device is determined based on the switching state, start a timer; and
switch the current work mode of the internal cooling device to the target work mode after the timer reaches the target duration.

In some embodiments, the switching unit is specifically configured to:
control a frequency converter in the internal cooling device based on a working frequency corresponding to the target work mode of the internal cooling device, to adjust a rotation speed of a motor rotating component in the internal cooling device.

In some embodiments, the switching unit is specifically configured to:
send a control instruction to a control device of the energy storage valve cooling system, where the control instruction is used to instruct to switch the current work mode of the internal cooling device to the target work mode.

In some embodiments, the first operation mode is a peak-load shifting operation mode or a frequency regulation operation mode, and the second operation mode is a zero-power operation mode; or
the first operation mode is a zero-power operation mode, and the second operation mode is a peak-load shifting operation mode or a frequency regulation operation mode.

In some embodiments, the obtaining module 1001 is specifically configured to:
determine the switching state based on detection information from an energy storage valve operation mode detection apparatus.

The control apparatus for an energy storage valve cooling system provided in the embodiments of this application can be used to execute the technical solutions in the control method for an energy storage valve cooling system provided in the embodiments of this application, with similar implementation principles and technical effects. Details are not repeated herein.

All or some of the modules in the foregoing control apparatus for an energy storage valve cooling system may be implemented by software, hardware, or a combination thereof. The modules may be embedded as hardware into or independent of a processor in a control device, or may be stored as software in a memory in a control device, so as to facilitate invocation by the processor to perform the operations corresponding to the modules.

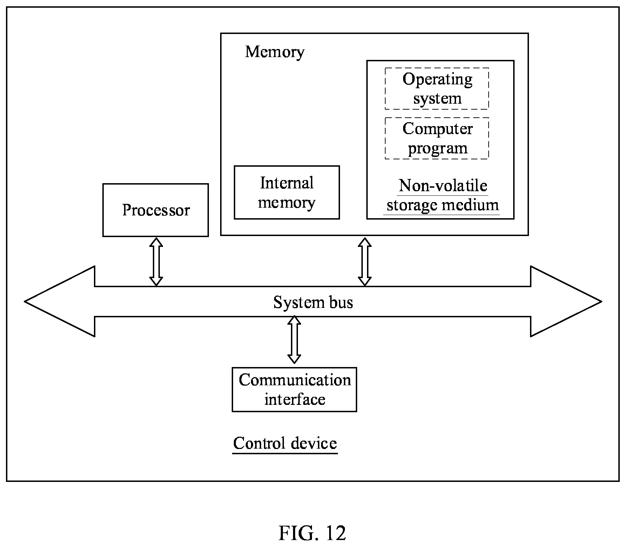

In some embodiments, FIG. 12 is a schematic structural diagram of a control device according to some embodiments of this application. As shown in FIG. 12, the control device provided in this embodiment of this application may include a processor, a memory, and a communication interface connected via a system bus. The processor of the control device is configured to provide computing and control capabilities. The memory of the computer device includes a non-volatile storage medium and an internal memory. The non-volatile storage medium stores an operating system and a computer program. The internal memory provides an environment for the operation of the operating system and the computer program in the non-volatile storage medium. The communication interface of the control device is used for wired or wireless communication with an external terminal, where the wireless communication may be implemented via Wi-Fi, a mobile cellular network, NFC (near field communication), or other technologies. The computer program, when executed by the processor, implements the technical solutions in the embodiments of the control method for an energy storage valve cooling system according to this application, with similar implementation principles and technical effects. Details are not repeated herein.

Those skilled in the art can understand that the structure shown in FIG. 12 is only a block diagram of a partial structure related to the solutions of this application and does not constitute a limitation on the control device to which the solutions of this application are applied. A specific control device may include more or fewer components than shown in the figure, or combine certain components, or have a different arrangement of components.

In some embodiments, a control device is further provided, including a memory and a processor. The memory stores a computer program, and when the processor executes the computer program, the technical solutions in the embodiments of the control method for an energy storage valve cooling system according to this application are implemented, with similar implementation principles and technical effects. Details are not repeated herein.

In some embodiments, a computer-readable storage medium is further provided, having a computer program stored thereon. When the computer program is executed by a processor, the technical solutions in the embodiments of the control method for an energy storage valve cooling system according to this application are implemented, with similar implementation principles and technical effects. Details are not repeated herein.

In some embodiments, a computer program product is further provided, including a computer program. When the computer program is executed by a processor, the technical solutions in the embodiments of the control method for an energy storage valve cooling system according to this application are implemented, with similar implementation principles and technical effects. Details are not repeated herein.

Persons of ordinary skill in the art can understand that all or part of the processes of the method in the embodiments may be implemented by a computer program instructing related hardware. The computer program may be stored in a non-volatile computer-readable storage medium, and when the computer program is executed, the processes in the foregoing method embodiments can be included. Any reference to a memory, database, or another medium used and provided in the embodiments of this application may include at least one of non-volatile and volatile memories. The non-volatile memory may include a read-only memory (Read-Only Memory, ROM), a magnetic tape, a floppy disk, a flash memory, an optical memory, a high-density embedded non-volatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, or the like. The volatile memory may include a random access memory (Random Access Memory, RAM), an external cache memory, or the like. For illustrative purpose other than limitation, the RAM may be in various forms, such as a static random access memory (Static Random Access Memory, SRAM) or a dynamic random access memory (Dynamic Random Access Memory, DRAM). The processor in the embodiments of this application may be a general-purpose processor, a central processing unit, a graphic processing unit, a digital signal processor, a programmable logic device, a quantum computing-based data processing logic device, or the like, but is not limited thereto.

Finally, it should be noted that the above embodiments are only used to illustrate the technical solutions of this application and not to limit them; although this application has been described in detail with reference to the foregoing embodiments, those of ordinary skill in the art should understand that they can still modify the technical solutions described in the foregoing embodiments or make equivalent substitutions for some or all of the technical features; and these modifications or substitutions do not cause the essence of the corresponding technical solutions to depart from the scope of the technical solutions of the embodiments of this application, and they should be included within the scope of the claims and specification of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A control method for an energy storage valve cooling system, wherein the method comprises:
obtaining a switching state of an operation mode of an energy storage valve in an energy storage valve system; and
adjusting a work mode of an internal cooling device in the energy storage valve cooling system based on the switching state.

2. The method according to claim 1, wherein the adjusting a work mode of an internal cooling device in the energy storage valve cooling system based on the switching state comprises:
determining a target work mode of the internal cooling device based on the switching state; and
switching a current work mode of the internal cooling device to the target work mode.

3. The method according to claim 2, wherein the determining a target work mode of the internal cooling device based on the switching state comprises:
determining a pre-switching first operation mode and a post-switching second operation mode of the energy storage valve based on the switching state; and
determining the target work mode based on heat generated by the energy storage valve in the first operation mode and heat generated by the energy storage valve in the second operation mode.

4. The method according to claim 3, wherein the determining the target work mode based on heat generated by the energy storage valve in the first operation mode and heat generated by the energy storage valve in the second operation mode comprises:
under a condition that the heat generated by the energy storage valve in the first operation mode is less than the heat generated in the second operation mode, setting a rated work mode of the internal cooling device as the target work mode, wherein a working frequency of the internal cooling device in the rated work mode is a rated working frequency.

5. The method according to claim 3, wherein the determining the target work mode based on heat generated by the energy storage valve in the first operation mode and heat generated by the energy storage valve in the second operation mode comprises:
under a condition that the heat generated by the energy storage valve in the first operation mode is greater than the heat generated in the second operation mode, setting a low-frequency work mode of the internal cooling device as the target work mode, wherein a working frequency of the internal cooling device in the low-frequency work mode is a low-frequency working frequency, and the low-frequency working frequency is less than a rated working frequency of the internal cooling device.

6. The method according to claim 5, wherein the switching a current work mode of the internal cooling device to the target work mode comprises:
in a case that the target work mode of the internal cooling device is determined based on the switching state, switching the current work mode of the internal cooling device to the target work mode after a delay of a target duration.

7. The method according to claim 6, wherein the switching the current work mode of the internal cooling device to the target work mode after a delay of a target duration comprises:
in a case that the target work mode of the internal cooling device is determined based on the switching state, starting a timer; and
switching the current work mode of the internal cooling device to the target work mode after the timer reaches the target duration.

8. The method according to any one of claims 2 to 7, wherein the switching a current work mode of the internal cooling device to the target work mode comprises:
controlling a frequency converter in the internal cooling device based on a working frequency corresponding to the target work mode of the internal cooling device, to adjust a rotation speed of a motor rotating component in the internal cooling device.

9. The method according to any one of claims 2 to 7, wherein the switching a current work mode of the internal cooling device to the target work mode comprises:
sending a control instruction to a control device of the energy storage valve cooling system, wherein the control instruction is used to instruct to switch the current work mode of the internal cooling device to the target work mode.

10. The method according to any one of claims 3 to 7, wherein the first operation mode is a peak-load shifting operation mode or a frequency regulation operation mode, and the second operation mode is a zero-power operation mode; or
the first operation mode is a zero-power operation mode, and the second operation mode is a peak-load shifting operation mode or a frequency regulation operation mode.

11. The method according to any one of claims 1 to 7, wherein the obtaining a switching state of an operation mode of an energy storage valve in an energy storage valve system comprises:
determining the switching state based on detection information from an energy storage valve operation mode detection apparatus.

12. A control apparatus for an energy storage valve cooling system, wherein the apparatus comprises:
an obtaining module, configured to obtain a switching state of an operation mode of an energy storage valve in an energy storage valve system; and
an adjustment module, configured to adjust a work mode of an internal cooling device in the energy storage valve cooling system based on the switching state.

13. A control device, comprising a memory and a processor, wherein the memory stores a computer program, and when the processor executes the computer program, the steps of the method according to any one of claims 1 to 11 are implemented.

14. A computer-readable storage medium, having a computer program stored thereon, wherein when the computer program is executed by a processor, the steps of the method according to any one of claims 1 to 11 are implemented.

15. A computer program product, comprising a computer program, wherein when the computer program is executed by a processor, the steps of the method according to any one of claims 1 to 11 are implemented.
